# EUROPEAN PATENT APPLICATION

(11) **EP 4 810 286 A1**
(43) Date of publication of application: **23.09.2026**
(21) Application number: 23957005.4
(22) Date of filing: 17.11.2023
(51) Int. Cl.: B60K 1/00, B60L 15/00, B62D 21/00

(54) **POWER TRAIN MOUNT STRUCTURE**

(71) Applicant: Nissan Motor Co., Ltd., Yokohama-shi, Kanagawa 221-0023 (JP)
(72) Inventor: HONGO, Ryo, Atsugi-shi, Kanagawa 243-0123 (JP); TANIMURA, Koji, Atsugi-shi, Kanagawa 243-0123 (JP)
(74) Representative: Global IP Europe Patentanwaltskanzlei
(86) International application number: PCT/JP2023/041457
(87) International publication number: WO 2025/104909

(57) **Abstract**

A powertrain mount structure includes four mounting members (5) configured to support a powertrain (1) on a vehicle body, and the four mounting members (5) each include a cylindrical elastic member (5a), are arranged in such a manner that an axial direction of each of the elastic members (5a) is parallel to a vehicle width direction, and are arranged as two upper mounts (6) and two lower mounts (7) on an upper side and a lower side in a vehicle vertical direction, respectively.

## Description

### Technical Field

The present invention relates to a powertrain mount structure.

### Background Art

In PTL 1 described below, a powertrain mount structure includes four mounting members configured to support an electric powertrain on a vehicle body, and the four mounting members each include a cylindrical elastic member, and axial directions of all the elastic members are arranged parallel to a vehicle longitudinal direction. Two front mounting members and two rear mounting members are arranged on a vehicle front side and a vehicle rear side of the electric powertrain, respectively, and the front mounting members and the rear mounting members are joined to a front cross member and a rear cross member, respectively. In general, in a mounting member, an inner cylinder is inserted into an inner hole of a cylindrical elastic member, and the elastic member is inserted into an inner hole of an outer cylinder.

### Citation List

### Patent Literature

PTL 1: WO 2014/097514

### Summary of Invention

### Technical Problem

However, there is a problem in that in the above-described powertrain mount structure, since the front and rear mounting members are shifted in a vehicle vertical direction from a position of the center of gravity (a position of a rotation shaft of the electric motor) of the electric powertrain and axial directions of the mounting members are set parallel to the vehicle longitudinal direction, a couple of road surface input in the vertical direction and driving reaction force of the powertrain acts obliquely on the elastic members of the mounting members, and as a result, twisting (torsion) occurs in the elastic members and durability of the elastic members is reduced.

An object of the present invention is to provide a powertrain mount structure that prevents twisting from occurring in an elastic member of a mounting member.

### Solution to Problem

A powertrain mount structure according to one aspect of the present invention includes four mounting members configured to support a powertrain on a vehicle body, and the four mounting members each include a cylindrical elastic member, are arranged in such a manner that an axial direction of each of the elastic members is parallel to a vehicle width direction, and are arranged as two upper mounts and two lower mounts on an upper side and a lower side in a vehicle vertical direction, respectively.

### Advantageous Effects of Invention

According to the one aspect of the present invention, since axial directions of the four mounting members are set in parallel with a vehicle width direction, even when the upper mounts and the lower mounts are arranged at positions shifted in the vehicle longitudinal direction from the position of the center of gravity of the powertrain, twisting is unlikely to occur in the elastic members.

The object and advantages of the invention will be realized and attained by means of the elements and combinations particularly pointed out in the claims. It is to be understood that both the foregoing general description and the following detailed description are exemplary and explanatory and are not restrictive of the invention.

### Brief Description of Drawings

FIG. 1 is a front view illustrative of one embodiment of a powertrain mount structure;
FIG. 2 is a side view of the powertrain mount structure in FIG. 1;
FIG. 3 is an exploded view of the powertrain mount structure in FIG. 1; and
FIG. 4 is an explanatory diagram of an attachment structure of an upper cross member in the powertrain mount structure in FIG. 1.

### Description of Embodiments

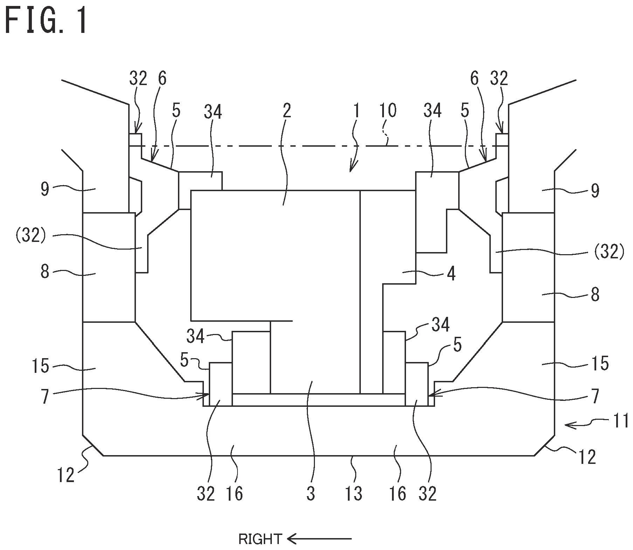

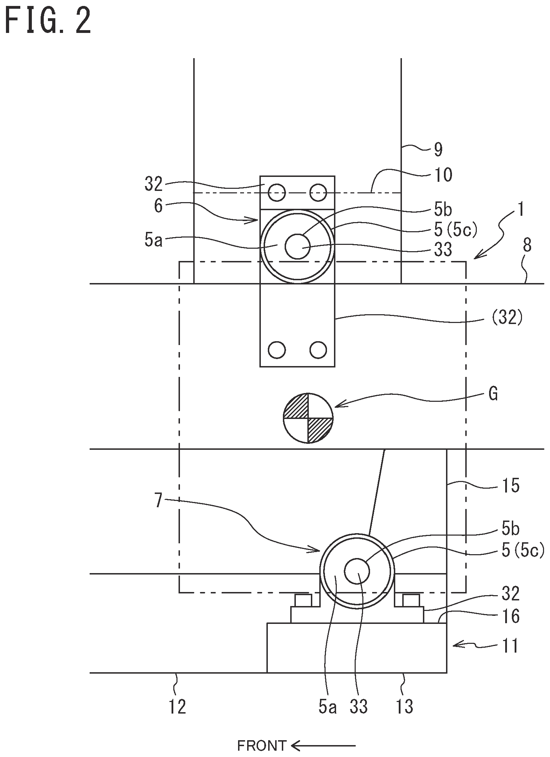

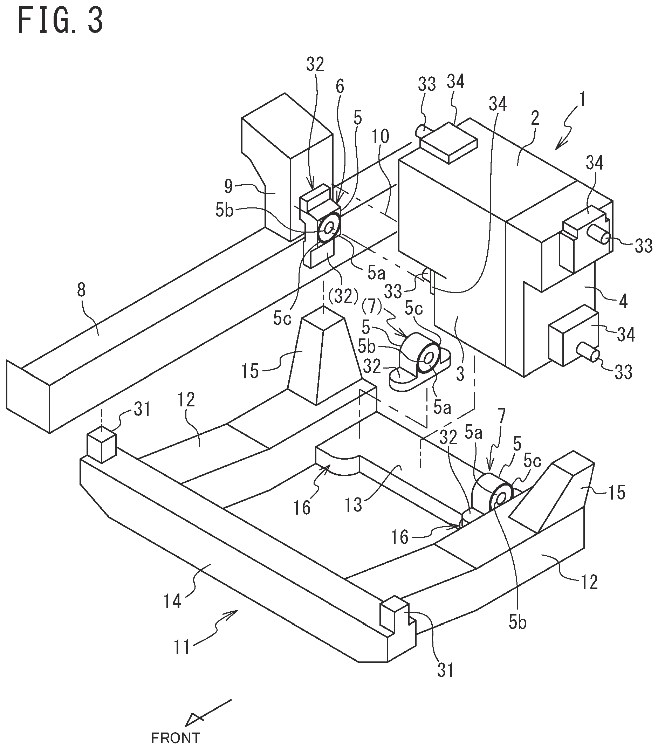

An embodiment of the present invention will be described below with reference to the drawings. Note that the respective drawings are schematic and do not necessarily depict the actual dimensions or precise configurations of practical implementation of the present invention. A powertrain mount structure of the embodiment illustrated in FIGS. 1 and 2 is applied to an electric vehicle using a motor 2 as a drive source, and in this example, is applied to a vehicle front portion. Although FIG. 1 is a front view of the powertrain mount structure, FIG. 1 includes a partial cross section. In addition, although FIG. 2 is a side view (a left side view of the vehicle) of the powertrain mount structure, FIG. 2 is a left side view of the vehicle viewed from a central portion in a vehicle width direction. To facilitate understanding of the powertrain mount structure of the embodiment, a main structure will be briefly described using an exploded view in FIG. 3. Note that a powertrain 1 is a collective term for a device that transmits driving force from the drive source, in this case, the motor 2, as propulsive force.

A pair of right and left side members 8 extending in a vehicle longitudinal direction are arranged on both sides in the width direction of the vehicle (illustration of the side member on the left-hand side of the vehicle is omitted in FIG. 3). Although the side members 8 generally extend below a vehicle interior around a central portion in the vehicle longitudinal direction, the side member 8 in FIG. 3 extends in the vehicle longitudinal direction at a position slightly higher than the central portion in the vehicle longitudinal direction since FIG. 3 illustrates the vehicle front portion. On each of the side members 8, a strut housing 9 is provided in a protruding manner in a vehicle upward direction approximately at a position of a front wheel. Since the strut housing 9 is provided at the position of the front wheel on each of the side members 8, there exists a pair of strut housings 9 on the right and left sides of the vehicle, as with the side members 8. Although a plate-shaped upper cross member 10 that connects the pair of strut housings 9 to each other is joined to the strut housings 9, details of the upper cross member 10 will be described later.

In addition, to undersides of the pair of side members 8, a suspension member 11 is joined in a bridging manner between the pair of side members 8. The suspension member 11 is a member to which arms and links of suspensions that support the front wheels are connected, and is a rigid member constituting a portion of a vehicle body (chassis). The suspension member 11 has a parallel cross structure including a pair of right and left side cross portions 12 that extend in the vehicle longitudinal direction under the side members 8, a rear cross portion 13 that connects vehicle rear-side ends of the pair of side cross portions 12 to each other, and a front cross portion 14 that connects vehicle front-side ends of the pair of side cross portions 12 to each other. In the suspension member 11, a link portion 15 that extends in the vehicle upward direction is provided in a protruding manner at a connection part between each of the side cross portions 12 and the rear cross portion 13, and a vehicle upper end of the link portion 15 is joined to an under surface of one of the side members 8. In addition, a joint portion 31 is provided in a protruding manner in the vehicle upward direction at a connection part between each of the side cross portions 12 and the front cross portion 14, and a vehicle upper end of the joint portion 31 is joined to the under surface of one of the side members 8. In the suspension member 11, a vicinity of each of both ends in the vehicle width direction of the rear cross portion 13, that is, a vicinity of a connection part between the rear cross portion 13 and one of the side cross portions 12, is widened in the vehicle longitudinal direction and is formed into a wide width portion 16.

The powertrain 1 illustrated in FIG. 3 includes the motor 2 occupying an upper left portion of a drawing of the powertrain 1, a differential device (differential gear) 3 arranged directly below the motor 2, and a reduction gear 4 that mechanically joins the motor 2 and the differential device 3 in a vehicle vertical direction. Although in FIG. 3, each constituent element of the powertrain 1 is illustrated as a cuboid, an actual form thereof differs from the cuboid. In addition, in this example, the motor 2 and the differential device 3 are housed in an integrated case. The motor 2 has an axis of a rotation shaft set in parallel with the vehicle width direction, and the output of the rotation shaft is decelerated by the reduction gear 4 and transmitted to the differential device 3. Although since the differential device 3 is a device that permits a rotational speed difference between the driven right and left front wheels, right and left front drive shafts projects from the differential device 3, the drive shafts are omitted in FIG. 3.

In the embodiment, four mounting members 5 are used to support the powertrain 1 in FIG. 3 on the vehicle body. The four mounting members 5, while having various overall shapes and sizes, each include a cylindrical elastic member 5a, an inner cylinder 5b inserted into an inner hole of the elastic member 5a, and an outer cylinder 5c into an inner hole of which the elastic member 5a is inserted. The elastic member 5a is generally made of rubber. On the outer cylinder 5c, a joint structure for joining the elastic member 5a to one of mounting objects is provided. The joint structure is generally formed by a pedestal portion 32 that supports the outer cylinder 5c and that is to be joined to the one of the mounting objects, and in the pedestal portion 32, a bolt hole (not illustrated) into which a bolt is to be inserted is bored. Using the joint structure, the mounting member 5 is mounted on one, generally the vehicle body side, of the two mounting objects between which the elastic member 5a is interposed. A rod member 33, which is generally made of metal, is inserted into the inner cylinder 5b, and the rod member 33 is supported on the other mounting object, generally the powertrain 1 side. There are some cases where in place of the rod member 33, a bolt is inserted into the inner cylinder 5b and a threaded portion of the bolt is screwed into the other mounting object. Specifications of the elastic members 5a may be identical or different. In the present embodiment, each of the four mounting members 5 is set to have the axis of the cylindrical elastic member 5a parallel to the vehicle width direction.

Two out of the four mounting members 5 are each attached to one of the side members 8 and a corresponding one of the strut housings 9 in a bridging manner therebetween at a connection part therebetween from the inner side in the vehicle width direction, and form upper mounts 6 of the powertrain 1. The remaining two mounting members 5 are each attached to an upper surface of one of the wide width portions 16 of the rear cross portion 13 at a connection part among the rear cross portion 13, one of the side cross portions 12, and a corresponding one of the link portions 15 in the suspension member 11, and form lower mounts 7 of the powertrain 1. On the other hand, to the powertrain 1, a rod member 33 that is to be inserted into the inner hole of each of the inner cylinders 5b is attached via an attachment 34, and the rod member 33 is integrally fixed to the attachment 34. The attachments 34 are attached to four locations, namely an upper portion and a lower portion of the reduction gear 4, an upper portion of the motor 2, and a lower portion of the differential device 3, in such a way that an axial direction of each of the rod members 33 is parallel to the vehicle width direction. Note that although each of the rod members 33 of the present embodiment illustrated in the drawings is a round rod member with a perfect circular cross section, since a cross-sectional shape of the inner hole of the inner cylinder 5b may have various shapes, such as an ellipse, an elongated hexagon, a rhombus, a quadrilateral, and a shape having a groove, a cross-sectional shape of the rod member 33 may also have various shapes that match the cross-sectional shape of the inner hole.

By inserting the rod member 33 on each of the attachments 34 into the inner hole of the inner cylinder 5b of one of the mounting members 5, the powertrain 1 is arranged with the mounting members 5 used as the two upper mounts 6 on the upper side and the two lower mounts 7 on the lower side in the vehicle vertical direction, as illustrated in FIGS. 1 and 2 and is arranged in such a manner that the cylindrical elastic members 5a of all the mounting members 5 have the axes thereof parallel to the vehicle width direction. Specifically, the upper mounts 6 are arranged on a vehicle upper side of a position of a center of gravity G of the powertrain 1, and the lower mounts 7 are arranged on the vehicle lower side of the position of the center of gravity G. The drive shafts (the illustration of which is omitted) of the powertrain 1 project approximately perpendicular to the plane of the figure at positions on the slightly lower side of the position of the center of gravity G illustrated in FIG. 2. The afore-described road surface input, for example, acts to push up the center of gravity G of the powertrain 1 in the vehicle upward direction. In addition, the driving reaction force acts in the clockwise direction or the counterclockwise direction about a principal axis of inertia of the powertrain 1, in FIG. 2. Since even when the two upper mounts 6 and the two lower mounts 7 are arranged at positions shifted from the position of the center of gravity of the powertrain 1 in the vehicle longitudinal direction, the road surface input and the driving reaction force or resultant force (couple) thereof acts on any of the mounting members 5 either in a direction that is orthogonal to the axial direction of the mounting member 5 or in a circumferential direction about the axial direction of the mounting member 5, twisting is unlikely to occur in the elastic member 5a. Therefore, it is possible to secure durability of the elastic members 5a.

In addition, since when mounting members are arranged on the vehicle front side and the vehicle rear side of the powertrain 1 as in PTL 1 described above, a required space in the vehicle longitudinal direction from the front mounting members to the rear mounting members by way of the powertrain 1 becomes large, the amount of crush stroke of the vehicle body in a front portion of the vehicle body relatively diminishes. In contrast, in the present embodiment, since the powertrain 1, the upper mounts 6, and the lower mounts 7 overlap one another when viewed from a side of the vehicle, it is possible to reduce the required space in the vehicle longitudinal direction for the foregoing and, as a result, secure the amount of crush stroke of the vehicle body in the vehicle front portion.

In addition, in the present embodiment, the motor 2 that is provided on the vehicle upper side (in an upper portion), the differential device 3 that is provided on the vehicle lower side (in a lower portion), and the reduction gear 4 that mechanically joins the motor 2 and the differential device 3 in the vehicle vertical direction (as viewed from the vehicle lateral side) constitute the powertrain 1. As a result, although the powertrain 1 is formed in a long shape in the vehicle vertical direction, the powertrain 1 requires less space in the vehicle longitudinal direction. Since when the powertrain 1 is supported on the vehicle body by the upper mounts 6 and the lower mounts 7, securing distance (space) between the elastic members 5a of the upper mounts 6 and the elastic members 5a of the lower mounts 7 enables the driving reaction force applied to the elastic members 5a to be reduced, it is possible to decrease (soften) the dynamic rigidity of the elastic members 5a and thereby improve sound vibration performance. When the powertrain 1 is formed in a long shape in the vehicle longitudinal direction, unless lengths in the vehicle vertical direction of the attachments 34 between the powertrain 1 and the upper mounts 6 or the attachments 34 between the powertrain 1 and the lower mounts 7 are unnecessarily increased, the space between the elastic members 5a of the upper mounts 6 and the elastic members 5a of the lower mounts 7 cannot be secured and as a result, the sound vibration performance cannot be improved. On the other hand, when the space between the elastic members 5a of the upper mounts 6 and the elastic members 5a of the lower mounts 7 is secured, the lengths of the attachments 34 become too large and mounting rigidity of the powertrain 1 is reduced, and the sound vibration performance also cannot be improved. In the present embodiment, by forming the powertrain 1 in a long shape in the vehicle vertical direction, it is not required to make the lengths of the attachments 34 in the vehicle vertical direction unnecessarily large, and it is nevertheless possible to secure the distance between the elastic members 5a of the upper mounts 6 and the elastic members 5a of the lower mounts 7 and improve the sound vibration performance.

In addition, as illustrated in FIG. 1, the motor 2, which is the drive source, requires a long axial direction length (in this case, vehicle width direction length) of the rotation shaft to secure power performance. On the other hand, it is possible to reduce the vehicle width direction length of the differential device 3. In the present embodiment, since as described before, the motor 2 and the differential device 3 are arranged in the upper portion and the lower portion of the powertrain 1, respectively, the upper portion and the lower portion of the powertrain 1 have a large vehicle width direction length and a small vehicle width direction length, respectively. Meanwhile, from a viewpoint of the vehicle body, the distances (spaces) in the vehicle width direction between the pair of side members 8 and between the pair of strut housings 9 are large, and the length in the vehicle width direction of the suspension member 11, particularly the rear cross portion 13, is small. The distance in the vehicle width direction between the two upper mounts 6, which are joined to the side members 8 and the strut housings 9 and support the upper portion of the powertrain 1 on the vehicle body, is large in accordance with the length in the vehicle width direction of the upper portion of the powertrain 1. In addition, the distance in the vehicle width direction between the two lower mounts 7, which are joined to the upper surface of the rear cross portion 13 of the suspension member 11 and support the lower portion of the powertrain 1 on the vehicle body, is small in accordance with the length in the vehicle width direction of the lower portion of the powertrain 1. Therefore, with regard to both the upper mounts 6 and the lower mounts 7, it is possible to reduce the distances in the vehicle width direction from the powertrain 1 to the mounting members 5, and the length in the vehicle width direction of the attachments 34 is also small. When the distances in the vehicle width direction from the powertrain 1 to the mounting members 5 are large and as a result, the length in the vehicle width direction of the attachments 34 becomes large, the mounting rigidity of the powertrain 1 is reduced, and the weight of the attachments 34 increases. In the present embodiment, since the distances in the vehicle width direction from the powertrain 1 to the mounting members 5 are small and as a result, the length in the vehicle width direction of the attachments 34 is also small, it is possible to secure the mounting rigidity of the powertrain 1 and also achieve weight reduction.

In addition, as described before, each of the mounting members 5 on the vehicle upper side, which constitute the upper mounts 6, is joined to both one of the side members 8 and a corresponding one of the strut housings 9 at the connection part between the side member 8 and the strut housing 9. As described in PTL 1 described above, when the front mounting members are joined to a front-side cross member and the rear mounting members are joined to a rear-side cross member, the cross members receive a bending input due to road surface input and driving reaction force applied in the vehicle vertical direction. Although the cross members are also rigid members, since the bending input is exerted in the orthogonal direction to an extension direction of a beam, it is difficult to secure mounting point rigidity of the mounting members, and the low mounting rigidity is disadvantageous for sound vibration. In contrast, each of the side members 8 is a beam extending in the vehicle longitudinal direction and each of the strut housings 9 is a beam extending in the vehicle vertical direction, and when a mounting member 5 is joined to the connection part between the side member 8 and the strut housing 9, the mounting member 5 is attached to inner surfaces in the vehicle width direction of both beams. Therefore, a bending input to the upper mount 6 that is constituted of the mounting member 5 is supported in an in-plane direction within the above-described inner side surfaces, and thus it is possible to enhance the mounting point rigidity and improve the sound vibration performance. In addition, due to each of the mounting members 5 being attached to bridge one of the side members 8 and a corresponding one of the strut housings 9, rigidity between the side member 8 and the strut housing 9 is also improved. Note that when the mounting point rigidity is to be improved by aligning a support direction against a bending input with the in-plane direction within the above-described inner side surface, even attaching a mounting member 5 to only one of the side member 8 and the strut housing 9 provides an advantageous effect. Further, in the present embodiment, as illustrated in FIG. 2, each of the link portions 15 of the suspension member 11 is joined to one of the side members 8 in the vicinity of a corresponding one of the upper mounts 6. Since due to the suspension member 11 being a parallel cross structure as described before, input in a plane-perpendicular direction (also referred to as an out-of-plane direction) that is orthogonal to the above-described inner side surface can be received by the rear cross portion 13 (including the front cross portion 14) that intersects at right angles the link portions 15 and the side cross portions 12, rigidity in the plane-perpendicular direction is also improved.

In addition, each of the mounting members 5 on the vehicle lower side that constitute the lower mounts 7 is attached (joined) to the upper surface of a portion that is a connection part among the rear cross portion 13, one of the side cross portions 12, and a corresponding one of the link portions 15 in the suspension member 11 and that is one of the wide width portions 16 of the rear cross portion 13. The suspension member 11 is, as described before, a parallel cross structure, and by joining the lower mounts 7 to all the connection parts among the rear cross portion 13 and the side cross portions 12, which constitute the parallel cross, and the link portions 15 for joining the parallel cross to the side members 8, it is possible to enhance the mounting point rigidity in all the vehicle width direction, the vehicle longitudinal direction, and the vehicle vertical direction. Further, since the lower mounts 7 are joined to the wide width portions 16, which are formed by widening the vehicle longitudinal direction width of the rear cross portion 13, not only is the mounting point rigidity in the vehicle longitudinal direction improved but the mounting point rigidity in the vehicle width direction is also improved due to width of connection to the side cross portions 12 becoming larger. By increasing the mounting point rigidity of the lower mounts 7 in this way, vibration transmitted from the motor 2 to the vehicle interior by way of the vehicle body is reduced and transmission characteristics are improved, and the sound vibration performance is also improved.

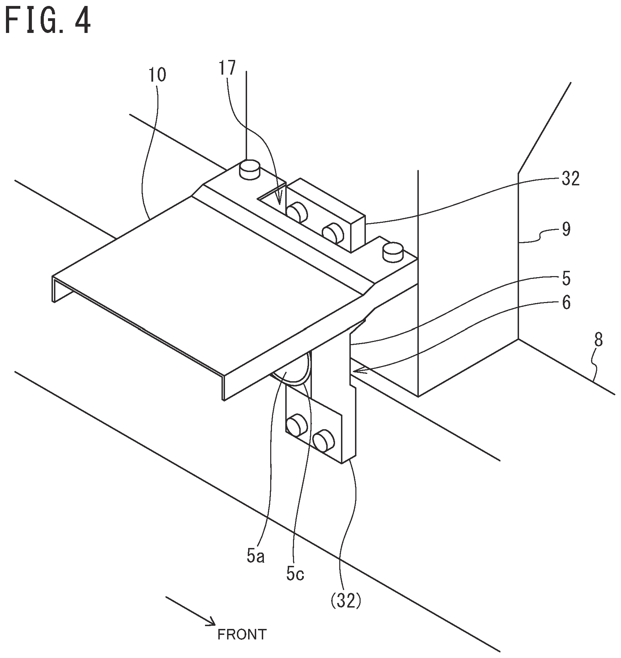

Next, the upper cross member 10 mentioned earlier will be described. FIG. 4 illustrates the connection part between the upper cross member 10 and the strut housing 9 on the left side of the vehicle. As is evident from the drawing, the upper cross member 10 is a plate-shaped member formed by bending a plate member made of metal and is joined to each of the strut housings 9 in such a way as to connect the right and left strut housings 9 slightly above the side members 8 (in the drawing, only a portion around the connection part is illustrated). The upper cross member 10 has a predetermined width in the vehicle longitudinal direction, and, for example, auxiliary devices are mounted on an upper surface of the upper cross member 10. In the present embodiment, a rectangular notch portion 17 is provided at a central portion in the vehicle longitudinal direction of an edge on the strut housing 9 side of the upper cross member 10, and the upper cross member 10 is joined to the strut housing 9 in such a manner that the upper mount 6 is arranged inside the notch portion 17. Due to this arrangement, the upper cross member 10 is arranged in such a way that the connection part between the upper cross member 10 and one of the strut housings 9 partially overlaps a corresponding one of the upper mounts 6 in the vehicle vertical direction. By bringing joint parts of the upper mounts 6 close to joint parts of the upper cross member 10, which connects the right and left sides of the vehicle body to each other and forms a beam structure extending in the right and left direction, the mounting point rigidity in the vehicle width direction can be enhanced, the transmission characteristics are improved, and the sound vibration performance is also improved. In particular, by arranging the upper mounts 6 to be housed in the notch portions 17 provided at the edges in the vehicle width direction of the upper cross member 10, the joint parts of the upper mounts 6 can be arranged immediately close to the joint parts of the upper cross member 10, and the above-described advantageous effects can be further improved.

As described above, in the present embodiment, a powertrain mount structure includes four mounting members 5 configured to support a powertrain 1 on a vehicle body, and the four mounting members 5 each include a cylindrical elastic member 5a, are arranged in such a manner that an axial direction of each of the elastic members 5a is parallel to a vehicle width direction, and are arranged as two upper mounts 6 and two lower mounts 7 on an upper side and a lower side in a vehicle vertical direction, respectively. Therefore, even when the upper mounts 6 and the lower mounts 7 are arranged at positions shifted from the position of the center of gravity of the powertrain 1 in the vehicle longitudinal direction, twisting is unlikely to occur in the elastic members 5a.

In addition, the powertrain 1 mechanically joins a motor 2 in an upper portion of the powertrain 1 and a differential device 3 in a lower portion of the powertrain 1 in a vehicle vertical direction by a reduction gear 4, and is formed in a long shape in the vehicle vertical direction. Because of this configuration, it is possible to secure distance between elastic members 5a of the upper mounts 6 and elastic members 5a of the lower mounts 7, the upper mounts 6 and the lower mounts 7 supporting the powertrain 1 on the vehicle body, and as a result, it is possible to reduce dynamic rigidity of the elastic members 5a and improve sound vibration performance.

In addition, by making distance in the vehicle width direction between the two upper mounts 6 larger than distance in the vehicle width direction between the two lower mounts 7, it is possible to support the motor 2 having a large vehicle width direction dimension with the pair of right and left side members 8 and the pair of right and left strut housings 9 and support the differential device 3 having a small vehicle width dimension with a suspension member 11 having a small vehicle width dimension. As a result, it is possible to make distances in the vehicle width direction from the powertrain 1 to the mounting members 5 small and make lengths in the vehicle width direction of attachments 34 between the powertrain 1 and the mounting members 5 small, and because of this capability, it is possible to secure mounting rigidity of the powertrain 1 and also achieve weight reduction.

In addition, joining each of the upper mounts 6 to at least one of one of the side members 8 and a corresponding one of the strut housings 9 causes a bending input to the upper mount 6 to be supported in an in-plane direction within inner side surfaces in the vehicle width direction of the side member 8 and the strut housing 9, and thus it is possible to enhance mounting point rigidity and improve sound vibration performance.

Moreover, by joining each of the upper mounts 6 to both one of the side members 8 and a corresponding one of the strut housings 9, it is possible to further enhance the mounting point rigidity of the upper mounts 6 and further improve the sound vibration performance. Furthermore, due to each of the mounting members 5 being attached to bridge one of the side members 8 and a corresponding one of the strut housings 9, rigidity between the side member 8 and the strut housing 9 is also improved.

In addition, by joining each of the lower mounts 7 to a connection part among a rear cross portion 13, one of side cross portions 12, and a corresponding one of link portions 15 in the suspension member 11, it is possible to enhance the mounting point rigidity in all the vehicle width direction, the vehicle longitudinal direction, and the vehicle vertical direction in the lower mount 7, and vibration transmitted from the motor 2 to the vehicle interior by way of the vehicle body is reduced, transmission characteristics are improved, and the sound vibration performance is also improved.

Moreover, since the lower mounts 7 are joined to wide width portions 16 that are formed by widening the vehicle longitudinal direction width of the rear cross portion 13, not only is the mounting point rigidity in the vehicle longitudinal direction improved but the mounting point rigidity in the vehicle width direction is also improved due to width of connection to the side cross portions 12 becoming larger. As a result, the transmission characteristics are further improved and the sound vibration performance can also be further improved.

In addition, by bringing joint parts of the upper mounts 6 close to joint parts of an upper cross member 10 by arranging the upper cross member 10 in such a way that each connection part between the upper cross member 10 and one of the strut housings 9 partially overlaps a corresponding one of the upper mounts 6 in the vehicle vertical direction, the mounting point rigidity in the vehicle width direction of the upper mounts 6 can be enhanced, the transmission characteristics are improved, and the sound vibration performance is also improved.

Moreover, by providing a notch portion 17 in an edge on each of the strut housing 9 sides of the upper cross member 10, the upper cross member 10 being a plate-shaped member, and arranging each of the upper mounts 6 inside one of the notch portions 17, the joint parts of the upper mounts 6 can be arranged immediately close to the joint parts of the upper cross member 10, and the mounting point rigidity in the vehicle width direction of the upper mounts 6 can be further enhanced, the transmission characteristics can be further improved, and the sound vibration performance can also be further improved.

### Reference Signs List

- 1: Powertrain
- 2: Motor
- 3: Differential device
- 4: Reduction gear
- 5: Mounting member
- 5a: Elastic member
- 6: Upper mount
- 7: Lower mount
- 8: Side member
- 9: Strut housing
- 10: Upper cross member
- 11: Suspension member
- 12: Side cross portion
- 13: Rear cross portion
- 14: Front cross portion
- 15: Link portion
- 16: Wide width portion
- 17: Notch portion

## Claims

1. A powertrain mount structure comprising
four mounting members configured to support a powertrain on a vehicle body,
wherein the four mounting members each include a cylindrical elastic member,
the four mounting members are arranged in such a manner that an axial direction of each of the elastic members is parallel to a vehicle width direction, and
the four mounting members are arranged as two upper mounts and two lower mounts on an upper side and a lower side in a vehicle vertical direction, respectively.

2. The powertrain mount structure according to claim 1, wherein the powertrain includes: a motor provided in an upper portion of the powertrain; a differential device provided in a lower portion of the powertrain; and a reduction gear configured to mechanically join the motor and the differential device in a vehicle vertical direction.

3. The powertrain mount structure according to claim 1, wherein distance in a vehicle width direction between the two upper mounts is larger than distance in a vehicle width direction between the two lower mounts.

4. The powertrain mount structure according to claim 1, wherein
the vehicle body includes: a pair of side members extending in a vehicle longitudinal direction and arranged on both sides in a vehicle width direction; and a pair of strut housings each provided in an upwardly protruding manner in a vehicle vertical direction from one of the pair of side members, and
each of the upper mounts is joined to at least one of one of the side members and a corresponding one of the strut housings.

5. The powertrain mount structure according to claim 4, wherein each of the upper mounts is joined to both one of the side members and a corresponding one of the strut housings.

6. The powertrain mount structure according to claim 1 comprising
a suspension member joined to the pair of side members in a bridging manner below the pair of side members,
wherein the suspension member includes: a rear cross portion extending in a vehicle width direction on a rear side in a vehicle longitudinal direction; side cross portions extending in a vehicle longitudinal direction on both sides in a vehicle width direction; and link portions each extending in a vehicle vertical direction at a connection part between the rear cross portion and one of the side cross portions and joined to one of the pair of side members, and
each of the lower mounts is joined to a connection part among the rear cross portion, one of the side cross portions, and a corresponding one of the link portions.

7. The powertrain mount structure according to claim 6, wherein
the rear cross portion has wide width portions, the wide width portions being wide in a vehicle longitudinal direction, in vicinities of connection parts between the rear cross portion and the side cross portions, and
each of the lower mounts is joined to one of the wide width portions.

8. The powertrain mount structure according to claim 1, wherein
the vehicle body includes an upper cross member joined to the pair of strut housings between the strut housings, and
the upper cross member is arranged in such a way that each connection part between the upper cross member and one of the strut housings partially overlaps a corresponding one of the upper mounts in the vehicle vertical direction.

9. The powertrain mount structure according to claim 8, wherein
the upper cross member is a plate-shaped member having a predetermined width in a vehicle longitudinal direction and has a notch portion in an edge on each of the strut housing sides, and
each of the upper mounts is arranged inside one of the notch portions.
